# EUROPEAN PATENT APPLICATION

(11) **EP 4 733 532 A1**
(43) Date of publication of application: **29.04.2026**
(21) Application number: 24943663.5
(22) Date of filing: 11.09.2024
(51) Int. Cl.: E06B 3/58

(54) **SHOWER DOOR ASSEMBLY AND SHOWER DOOR COMPRISING SAME**

(71) Applicant: Ideal Sanitary Ware Co., Ltd., Foshan, Guangdong 528515 (CN)
(72) Inventor: WEI, Wuxiang, Foshan, Guangdong 528515 (CN)
(74) Representative: CAPRI
(86) International application number: PCT/CN2024/118262
(87) International publication number: WO 2026/055845

(57) **Abstract**

A shower door assembly and a shower door including same. The shower door assembly includes an adjustment frame (10), a fixed frame (20) and an adjustment assembly (30). Each of the adjustment frame (10) and the fixed frame (20) is a channel profile with a rectangular cross-section, and the adjustment frame (10) and the fixed frame (20) have widths that allow side walls of the adjustment frame (10) to respectively overlap with side walls of the fixed frame (20) when the adjustment frame (10) is connected to the fixed frame (20). The adjustment frame (10) further includes a through-hole (105). The adjustment assembly (30) includes an adjustment bolt (301), a fixing seat (302), and an engagement member (303). The fixing seat (302) is of a block structure, and the fixing seat (302) includes a countersunk hole (3024). The engagement member (303) includes a connecting block (3033), and a threaded hole is formed on an end face of the connecting block (3033). The fixed frame (20) is fixed on a mounting surface, the fixing seat (302) is detachably mounted in a channel of the adjustment frame (10), and the fixing seat (302) is connected to the engagement member (303) by the adjustment bolt (301). The fixed frame (20) is connected to the adjustment frame (10) with openings of the fixed frame (20) and the adjustment frame (10) facing each other, and the engagement member (303) is in interference fit with the fixed frame (20). A depth to which the adjustment bolt (301) is screwed into the threaded hole is adjusted through the through-hole (105), so as to adjust a degree of overlap between the fixed frame (20) and the adjustment frame (10).

## Description

### FIELD

The present application relates to the technical field of shower doors, and in particular to a shower door assembly and a shower door including the shower door assembly.

### BACKGROUND

The installation of a shower door takes the interior walls of the building as reference, and the shower door should be kept vertical after installation. However, due to various factors, the walls in the building are not perfectly vertical. For instance, they may be inclined outward or inward. If the shower door is installed flush against the wall, it may be inclined, which will affect the opening and closing of the door due to gravity. Therefore, it is necessary to adjust the distances between the upper and lower ends of the shower door and the walls during installation to ensure that the shower door remains vertical.

Conventional installation methods typically involve usage of a combination of a fixed frame and a movable frame. The fixed frame is designed to be fixed on the wall, while the movable frame is connected to the door panel (for example, a glass door). During installation, the fixed frame is mounted on the wall first, and then the position of the movable frame is adjusted to align with the fixed frame, so that the door panel is kept vertical. At the end of this process, holes are drilled on both the movable and fixed frames, and they are fixed together with fasteners, such as screws. However, the existing installation methods have several notable drawbacks. Firstly, since the movable frame needs to be precisely aligned with the fixed frame, it usually requires at least two technicians to collaborate on the drilling and fixing operations, which not only increases installation costs but also extends the installation time. Secondly, onsite drilling is required based on different site conditions, and the surface of the frame made of a light material (such as aluminum alloy) may be damaged during drilling, which not only degrades the appearance quality of the final product, but also may make some components unusable because of the damage, increasing economic losses for the user.

In view of the above problems, there is an urgent market demand for a shower door assembly that is easy to install and has a low risk of damage during installation.

### SUMMARY

Hereinafter, a brief summary of the present application is given in order to provide a basic understanding of some aspects of the present application. However, it should be understood that this summary is not an exhaustive overview of the present application, and is not intended to identify key or important portions of the present application, nor is it intended to limit the scope of the present application. This summary is only to present some inventive concepts related to the present application in a simplified form, which serves as a prelude to the more detailed description that follows.

An object of the present application is to provide a shower door assembly to reduce the installation difficulty and the risk of damage during installation.

In a first aspect, a shower door assembly is provided according to the present application, including an adjustment frame, a fixed frame and an adjustment assembly.

Each of the adjustment frame and the fixed frame is a channel profile with a rectangular cross-section, and the adjustment frame and the fixed frame have widths that allow side walls of the adjustment frame to respectively overlap with side walls of the fixed frame when the adjustment frame is connected to the fixed frame. Moreover, the adjustment frame further includes a through-hole.

The adjustment assembly includes an adjustment bolt, a fixing seat, and an engagement member.

The fixing seat is of a block structure, and the fixing seat includes a countersunk hole, which is a through-hole.

The engagement member includes a connecting block, and a threaded hole is formed on an end face of the connecting block.

When the shower door assembly is in a working state:

the fixed frame is fixed on a mounting surface, and the fixing seat is detachably mounted in a channel of the adjustment frame; the threaded hole of the engagement member is aligned with the countersunk hole of the fixing seat, and the adjustment bolt passes through the through-hole of the adjustment frame and the countersunk hole in sequence and is inserted in the threaded hole; the fixed frame is connected to the adjustment frame with openings of the fixed frame and the adjustment frame facing each other, and the engagement member is in interference fit with the fixed frame; and a depth to which the adjustment bolt is inserted in the threaded hole is configured to be adjusted through the through-hole of the adjustment frame, so as to adjust a degree of overlap between the fixed frame and the adjustment frame.

In an embodiment, the adjustment frame is a channel profile, and a protrusion is formed at a bottom portion of the adjustment frame to divide the bottom portion of the adjustment frame into two cavities. The through-hole of the adjustment frame is formed at a bottom portion of a first cavity of the two cavities, and engaging parts are respectively formed on side walls of the first cavity.

In an embodiment, the engagement member is of a trapezoidal groove structure, and the connecting block is formed on a side, which faces an opening of the trapezoidal groove structure, of a bottom portion of the trapezoidal groove structure. The threaded hole is formed on the end face of the connecting block, and the threaded hole is a through-hole.

In an embodiment, the fixed frame is a channel profile with a rectangular cross-section, and limiting ribs are respectively formed on inner walls of this channel profile.

In an embodiment, the fixing seat includes a bottom plate, and the countersunk hole is provided at a center of the bottom plate. Limiting blocks are respectively formed at both ends of the bottom plate, and the limiting blocks are configured to prevent the connecting block from shaking in a direction perpendicular to an axial direction of the countersunk hole.

In an embodiment, a side wall of the engagement member is elastic to overcome deformation of the side wall of the engagement member towards a centerline of the trapezoidal groove structure.

In an embodiment, an angle between the side wall of the engagement member and the bottom portion of the engagement member is greater than 90 degrees.

In an embodiment, a tenon is formed at a tail end of the connecting block, and the tenon is configured to be engaged with sides of limiting flanges facing the bottom portion of the adjustment frame.

In an embodiment, an accommodation groove is formed on a side of the protrusion of the adjustment frame facing away from the opening of the channel profile, and the accommodation groove is configured to accommodate a side edge of a screen of a shower door.

In a second aspect, a shower door is further provided according to the present application, and a frame of the shower door includes the shower door assembly according to any of the above embodiments.

In the shower door assembly and the shower door including the shower door assembly according to the present application, when the adjustment frame is connected to the fixed frame with the side walls of the adjustment frame respectively overlap with the side walls of the fixed frame, the fixing seat is connected to the engagement member by the adjustment bolt, and the depth to which the adjustment bolt is screwed into the connecting block of the engagement member is controlled through the through-hole of the adjustment frame, so as to adjust the degree of overlap between the side walls of the fixed frame and the side walls of the adjustment frame. As such, the fixing seat and the engagement member of the adjustment assembly are detachably mounted in the adjustment frame and the fixed frame respectively. Then the fixed frame is fixed on the wall, and the adjustment frame is connected to the fixed frame with the openings of the fixed frame and the adjustment frame facing each other. Finally, the degree of overlap between the adjustment frame and the fixed frame is precisely adjusted by controlling the insertion depth of the adjustment bolt. The mounting difficulty and the number of technicians required for construction are reduced. In addition, this installation and adjustment method avoids drilling holes in the fixed frame and the adjustment frame at the installation site, and reduces the risk of damage of the fixed frame and the adjustment frame.

### BRIEF DESCRIPTION OF THE DRAWINGS

The accompanying drawings are included to provide further understanding of the present application and are incorporated into and constitute a portion of this specification. The accompanying drawings illustrate embodiments of the present application and serve to explain the principles of the present application together with the description below.
FIG. 1 is a schematic view showing optional mounting positions of a shower door assembly according to the present application;
FIG. 2 is an exploded schematic view showing a structure of the shower door assembly according to the present application;
FIG. 3 is a schematic view showing a structure of an adjustment frame according to the present application;
FIG. 4 is a schematic view showing a structure of a fixed frame according to the present application;
FIG. 5 is a schematic view showing a structure of a fixing seat of an adjustment assembly according to the present application;
FIG. 6 is a schematic view showing a structure of an engagement member of the adjustment assembly according to the present application;
FIG. 7 is a schematic view showing a pre-mounted structure of the shower door assembly according to the present application; and
FIG. 8 is a schematic view showing an assembly of the shower door assembly according to the present application.

| | | | |
|---|---|---|---|
| 10. | adjustment frame; | 20. | fixed frame; |
| 30. | adjustment assembly; | 101. | adjustment frame bottom plate; |
| 102. | adjustment frame blocking plate; | 103. | first cavity; |
| 104. | limiting flange; | 105. | through-hole; |
| 106. | mounting hole; | 107. | accommodation groove; |
| 201. | fixed frame bottom plate; | 202. | fixed frame blocking plate; |
| 203. | limiting rib; | 301. | adjustment bolt; |
| 302. | fixing seat; | 303. | engagement member; |
| 3021. | bottom plate; | 3022. | first surface; |
| 3023. | second surface; | 3024. | countersunk hole; |
| 3025. | accommodation cavity; | 3026. | limiting block; |
| 3031. | bottom portion; | 3032. | engagement member side wall; |
| 3033. | connecting block; | 3034. | threaded hole. |

### DETAILED DESCRIPTION OF THE EMBODIMENTS

In this specification, it should also be understood that when an element is described in relation to other elements, such as being "on", "connected to" or "coupled to" another element, this element may be directly disposed on, directly connected to or directly coupled to the another element, or there may be a third element therebetween. In contrast, when an element is described as being "directly on", "directly connected to" or "directly coupled to" another element in this specification, there is no intervening element between them.

The present application is described more comprehensively hereinafter with reference to the accompanying drawings, in which embodiments are shown. However, the present application may be implemented in many different ways and should not be interpreted as being limited to the embodiments set forth herein. Rather, these embodiments are provided to make the present application thorough and complete, and will fully convey the scope of the present application to those skilled in the art. Same reference numerals refer to same elements throughout the specification. Furthermore, in the accompanying drawings, the thickness, proportions and dimensions of the components are enlarged for clarity.

The terminology used herein is for the purpose of describing specific embodiments only and is not intended to be limitative. Unless otherwise clearly indicated in the context, the terms "a", "an", "the" and "at least one" as used herein do not constitute a limitation on quantity, but are intended to include both singular and plural forms. For example, unless otherwise clearly indicated in the context, "an element" has the same meaning as "at least one element". The term "at least one" should not be interpreted as being limited to the number "one". The term "or" means "and/or". The term "and/or" includes any and all combinations of one or more of the associated listed items.

It should be understood that although terms such as "first" and "second" are used herein to describe the stated objects, these objects should not be limited by these terms. These terms are only used to distinguish one object from other objects. For example, an object referred to as a first object, such as a first doped element, in one embodiment may be referred to as a second object, such as a second doped element, in another embodiment without departing from the scope of the appended claims.

Furthermore, the terms "lower", "below", "above", "upper" and the like are used to describe the positional relationship of the components shown in the drawings. These terms may be relative concepts and are described based on the directions presented in the drawings.

In view of the discussed measurement and the error associated with the measurement of a specific quantity, the term "about" or "approximately" as used herein means including the stated value and an average value within an acceptable deviation range for the given value as determined by those skilled in the art. For example, the term "about" may indicate an average within one or more standard deviations, or an average within ± 30%, 20%, 10%, or 5% of the stated value.

Unless otherwise defined, all terms used herein, including technical terms and scientific terms, have the same meanings as commonly understood by those skilled in the art. Terms as defined in commonly used dictionaries should be interpreted as having the same meanings as they are used in the relevant technical context, and unless explicitly defined in the specification, these terms should not be interpreted as having formal meanings in an idealized or overly formal sense.

The meaning of "including" or "comprising" indicates a property, a quantity, a step, an operation, an element, a component or a combination thereof, but does not exclude other properties, quantities, steps, operations, elements, components or their combinations.

The embodiments are described herein with reference to a cross-sectional perspective view, as a schematic view of an idealized embodiment. Thus, variations in shape relative to the illustration are anticipated as a result of reasons such as manufacturing techniques and/or tolerances. Therefore, the embodiments described herein should not be interpreted as being limited to the specific shapes of regions as shown herein, but should include deviations in shape caused by, for example, manufacturing. For example, regions shown or described as flat may typically have rough and/or non-linear features. Moreover, the acute angle as shown can be rounded. Therefore, the regions shown in the drawings are schematic in nature, and their shapes are not intended to show the exact shapes of the regions and are not intended to limit the scope of the claims.

Hereinafter, exemplary embodiments according to the present application will be described with reference to the drawings.

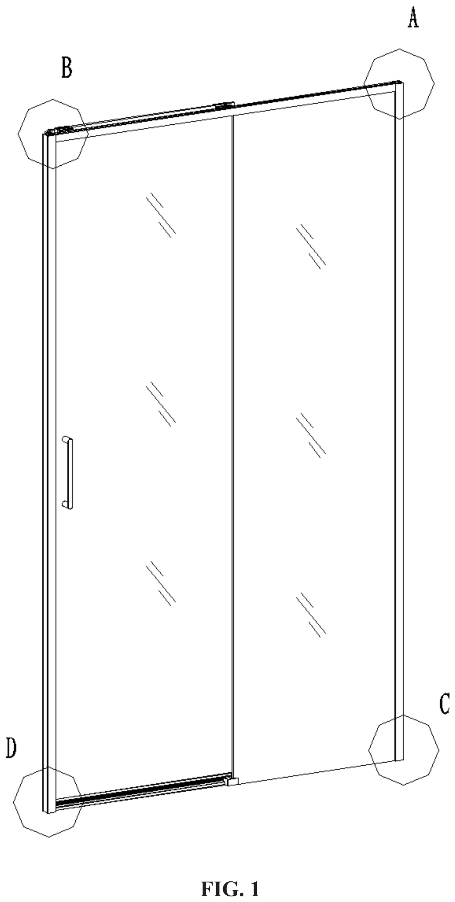

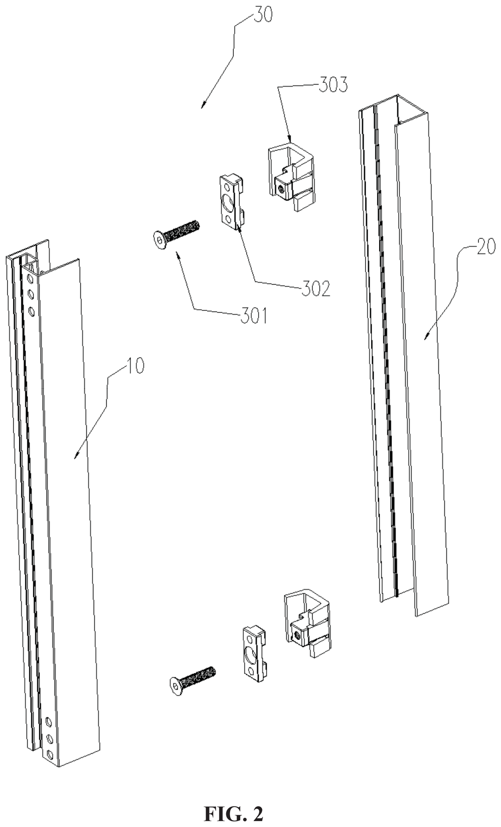

Referring to FIGS. 1 and 2, a shower door assembly is provided according to the present application in order to reduce the installation difficulty of the shower door and the risk of damaging the shower door assembly during installation. FIG. 1 shows mounting positions of the shower door assembly according to the present application in a shower door system. As shown in FIG. 1, the shower door assembly is arranged at an end portion of a shower door frame. FIG. 2 is an exploded schematic view showing a structure of the shower door assembly.

Referring to FIG. 2, the shower door assembly according to the present application includes an adjustment frame 10, a fixed frame 20 and an adjustment assembly 30. As shown in FIGS. 2, 3 and 4, each of the adjustment frame 10 and the fixed frame 20 is a channel profile with a rectangular cross-section, and the adjustment frame 10 and the fixed frame 20 have widths that allow side walls of the adjustment frame 10 to respectively overlap with side walls of the fixed frame 20 when the adjustment frame 10 and the fixed frame 20 are connected to each other. In an embodiment, the adjustment frame is in sliding fit with the fixed frame. In an example, a distance between inner walls of adjustment frame blocking plates 102 is equal to a width of the fixed frame 20. In an example, a portion of the adjustment frame blocking plate 102 close to an edge of a channel opening of the adjustment frame 10 protrudes inward to increase a clamping force applied to the fixed frame 20. It should be noted that, herein, a direction in which each channel structure extends is a length direction, a direction perpendicular to the length direction and parallel to a bottom portion of the channel structure is a width direction, and a direction perpendicular to both the length direction and the bottom portion of the channel structure is a thickness direction.

Referring to FIGS. 2, 5 and 6, the adjustment assembly 30 includes an adjustment bolt 301, a fixing seat 302 and an engagement member 303. The fixing seat 302 is of a block structure and includes a countersunk hole 3024. The countersunk hole 3024 is a through-hole, and an accommodation cavity 3025 is provided at an end of the countersunk hole 3024. The accommodation cavity 3025 is configured to accommodate a head portion of the adjustment bolt 301, so that the adjustment bolt 301 pushes the fixing seat 302 when moving forward. The engagement member 303 includes a connecting block 3033, and a threaded hole 3034 is formed on an end face of the connecting block 3033.

When the shower door assembly is in a working state, the fixed frame 20 is fixed on a mounting surface (e.g., a wall), and the fixing seat 302 is detachably mounted in a channel of the adjustment frame 10. The threaded hole 3034 of the engagement member 303 is aligned with the countersunk hole of the fixing seat 302, and the adjustment bolt 301 passes through a through-hole 105 and the countersunk hole 3024 in sequence and is screwed into the threaded hole 3034. The fixed frame 20 is connected to the adjustment frame 10 with openings of the fixed frame 20 and the adjustment frame 10 facing each other, and the engagement member 303 is in interference fit with the fixed frame 20. The depth to which the adjustment bolt 301 is screwed into the threaded hole 3034 is adjusted through the through-hole 105, so as to adjust a degree of overlap between the fixed frame 20 and the adjustment frame 10.

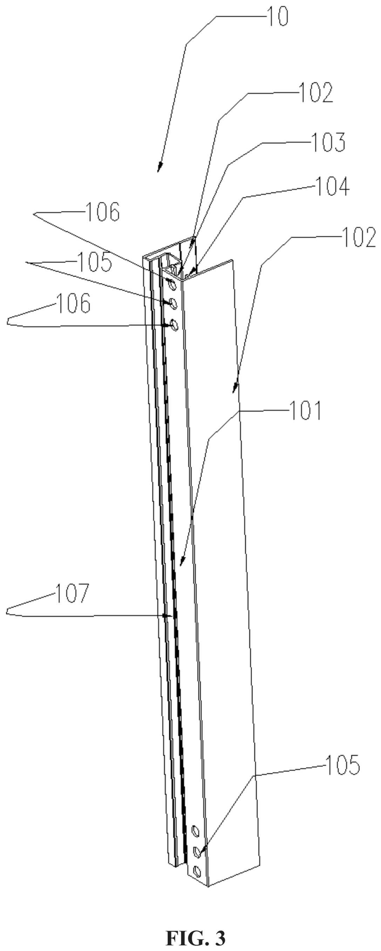

In some embodiments, as shown in FIG. 3, a protrusion is further formed on a bottom plate 101 of the adjustment frame 10 to divide the bottom portion of the adjustment frame 10 into two cavities. The through-hole 105 is formed at a bottom portion of a first cavity 103 of the two cavities, and engaging parts 104 are respectively formed on side walls of the first cavity 103. Each engaging part 104 extends in the length direction of the adjustment frame 10. The first cavity 103 is configured to accommodate the fixing seat 302, and the engaging part 104 extends from an inner wall of the first cavity 103 towards the interior of the first cavity 103, so that an opening of the first cavity 103 has a width less than a width of the fixing seat 302. Therefore, it is possible to limit the relative displacement between the fixing seat 302 and the adjustment frame 10 in the thickness direction.

In some other embodiments, as shown in FIG. 3, an accommodation groove 107 is formed on a side of the protrusion at the bottom portion of the adjustment frame 10 facing away from the opening of the channel profile, and the accommodation groove 107 is configured to accommodate a side edge of a screen of the shower door. In an embodiment, the accommodation groove 107 is further configured to accommodate a waterproof material, a magnetic member and the like. According to some other embodiments, as shown in FIG. 3, a mounting hole 106 is formed at at least one side of the through-hole 105 for connecting the adjustment frame 10 and the fixing seat 302 by a fastener.

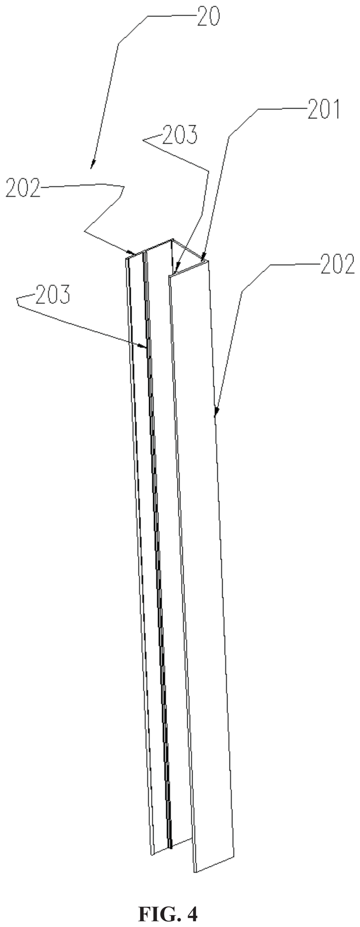

In some embodiments, as shown in FIG. 4, the fixed frame 20 is a channel profile, including a fixed frame bottom plate 201 and fixed frame blocking plates 202. A limiting rib 203 is formed on an inner wall of each of the fixed frame blocking plates 202, and the limiting rib 203 extends in the length direction of the fixed frame 20. When the fixed frame 20 is in connection with the adjustment frame 10, an edge of the engagement member 303 abuts against a side of the limiting rib 203 close to the fixed frame bottom plate 201 to prevent the engagement member 303 from separating from the fixed frame 20 in the thickness direction.

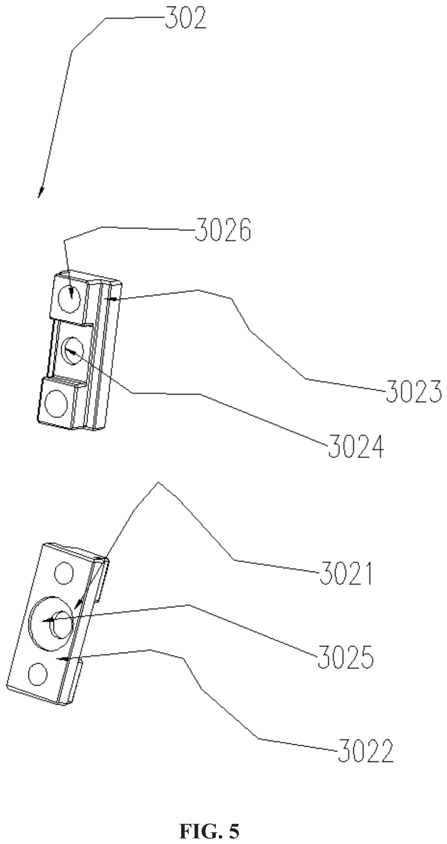

In some embodiments, as shown in FIG. 5, the fixing seat 302 includes a bottom plate 3021. The countersunk hole 3024 is provided at a center of the bottom plate 3021, and limiting blocks 3026 are formed at both ends of the bottom plate 3021 respectively. The accommodation cavity 3025 of the countersunk hole 3024 is located on a first surface 3022 of the bottom plate 3021, and the countersunk hole 3024 runs from the first surface 3022 to a second surface 3023 of the bottom plate 3021. The limiting blocks 3026 are located on the second surface 3023. A space between the limiting blocks 3026 at both ends of the fixing seat 302 is configured to be in concave-convex fit with the connecting block 3033 of the engagement member 303. In an embodiment, the through-hole 105 has a diameter less than that of the accommodation cavity 3025, thereby preventing an axial movement of the adjustment bolt 301. In an embodiment, the fixing seat 302 is mounted in the adjustment frame 10 by screws, adhesive, or the like.

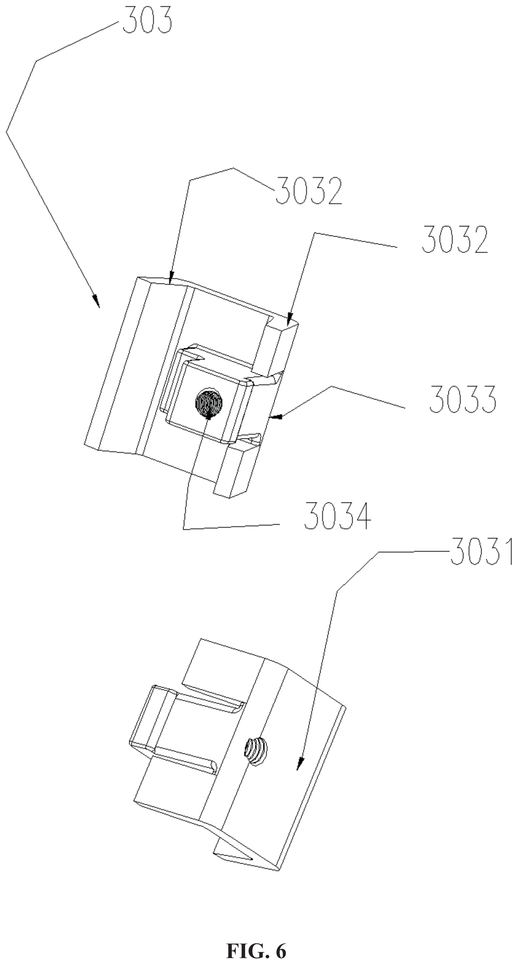

In some exemplary embodiments, referring to FIG. 6, the engagement member 303 is of a trapezoidal groove structure, and the connecting block 3033 is formed on a side, which faces an opening of the trapezoidal groove structure, of a bottom portion 3031 of the engagement member, which has the trapezoidal groove structure. The threaded hole 3034 is formed on an end face of the connecting block 3033. In an embodiment, the threaded hole is a through-hole. The opening of the engagement member 303 has a width greater than that of the bottom portion of the engagement member. In other words, an angle between an engagement member side wall 3032 and the engagement member bottom portion 3031 is greater than 90 degrees. In an example, the engagement member side walls are elastic to overcome deformation of the engagement member side walls towards a centerline of the trapezoidal groove structure. As the engagement member 303 enters the fixed frame 10, the engagement member side walls are compressed by the limiting ribs 203 on the inner walls of the blocking plates of the fixed frame 20, and retract inward towards the centerline of the engagement member. When the engagement member 303 has completely passed through the limiting ribs 203, the engagement member side walls restore their shape due to elasticity. As such, edges of the opening of the engagement member 303 abut against the limiting ribs 203, thereby preventing the engagement member 303 from separating from the fixed frame 20 in the thickness direction. In some other embodiments, as shown in FIG. 6, a tenon is formed at a tail end of the connecting block 3033, that is, an end of the connecting block 3033 close to the opening of the engagement member. The tenon is configured to be in engagement with sides of the limiting flanges 104 of the adjustment frame 10 facing the bottom portion of the adjustment frame. The tenon is hooked on the sides of the limiting flanges 104 facing the bottom portion of the adjustment frame, so that the engagement member 303 is prevented from separating from the adjustment frame 10 in the thickness direction.

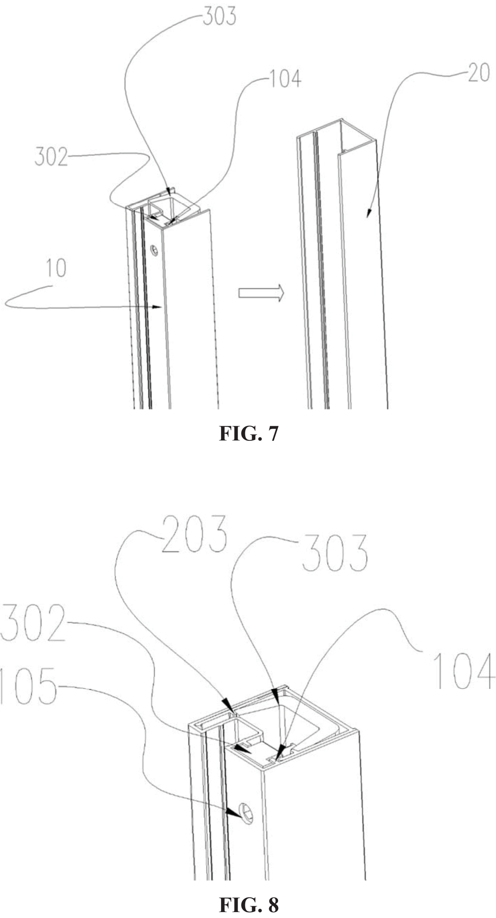

FIG. 7 is a schematic view showing a pre-mounted structure of the shower door assembly according to the present application. Referring to FIG. 7, the adjustment assembly 30 is pre-mounted in the channel of the adjustment frame 10. In an example, the adjustment bolt 301 passes through the countersunk hole of the fixing seat 302, and then the fixing seat 302 is inserted into the first cavity 103 from an end portion of the adjustment frame 10, so that the bottom plate of the fixing seat 302 is limited by the limiting flanges 104. The opening of the engagement member 303 is arranged to face the fixing seat 302 and covers the fixing seat 302. The threaded hole of the connecting block of the engagement member 303 is aligned with the countersunk hole of the fixing seat 302, and the adjustment bolt 301 is rotated to be screwed into the threaded hole, thereby reducing the distance between the engagement member 303 and the fixing seat 302. In some other embodiments, the fixing seat 302 is connected to the engagement member 303 by the adjustment bolt 301 first, and the distance between the edges of the opening of the engagement member 303 and the bottom plate of the fixing seat 302 is greater than or equal to a thickness of each limiting flange 104. The assembled adjustment assembly 30 is then inserted into the adjustment frame 10 from the end portion of the adjustment frame 10. Finally, as shown in FIG. 8, the adjustment frame 10, on which the adjustment assembly 30 is pre-mounted, is connected to the fixed frame 20 with the openings of the adjustment frame 10 and the fixed frame 20 facing each other. As shown in FIG. 8, when the adjustment frame 10 is connected to the fixed frame 20, the edges of the engagement member 303 facing the adjustment frame respectively abut against the limiting ribs 203 on the inner walls of the fixed frame. It should be noted that the above pre-mounting sequence is only exemplary, and the installation of the shower door assembly according to the present application is not limited by the mounting sequence of the components of the adjustment assembly.

A shower door is further provided according to an embodiment of the present application. As shown in FIG. 1, the shower door includes the shower door assembly provided in any of the above embodiments.

In the shower door assembly and the shower door including the shower door assembly according to the present application, the adjustment frame is connected to the fixed frame with the side walls of the adjustment frame respectively overlap with the side walls of the fixed frame. The fixing seat is connected to the engagement member by the adjustment bolt, and the depth to which the adjustment bolt is screwed into the connecting block of the engagement member is controlled via the through-hole of the adjustment frame, so as to adjust the degree of overlap between the side walls of the fixed frame and the side walls of the adjustment frame. As such, the fixing seat and the engagement member of the adjustment assembly are detachably mounted in the adjustment frame and the fixed frame respectively. Then the fixed frame is fixed on the wall, and the adjustment frame is connected to the fixed frame with the openings of the fixed frame and the adjustment frame facing each other. Finally, the degree of overlap between the adjustment frame and the fixed frame is precisely adjusted by controlling the insertion depth of the adjustment bolt. The mounting difficulty and the number of technicians required for construction are reduced. In addition, this installation and adjustment method avoids drilling holes in the fixed frame and the adjustment frame at the installation site, and reduces the risk of damage of the fixed frame and the adjustment frame.

The embodiments described above are merely specific embodiments of the present application. The protection scope of the present application is not limited thereto. Variations and substitutions may be easily obtained by those skilled in the art within the technical scope disclosed in the present application, and all these variations and substitutions shall fall within the protection scope of the present application. Therefore, the protection scope of the present application shall be defined by the protection scope of the claims.

## Claims

1. A shower door assembly, comprising:
an adjustment frame (10);
a fixed frame (20); and
an adjustment assembly (30), wherein
each of the adjustment frame (10) and the fixed frame (20) is a channel profile with a rectangular cross-section, and the adjustment frame (10) and the fixed frame (20) have widths that allow side walls of the adjustment frame (10) to respectively overlap with side walls of the fixed frame (20) when the adjustment frame (10) is connected to the fixed frame (20);
the adjustment frame (10) further comprises a through-hole (105);
the adjustment assembly (30) comprises an adjustment bolt (301), a fixing seat (302), and an engagement member (303);
the fixing seat (302) is of a block structure, and the fixing seat (302) comprises a countersunk hole (3024), which is a through-hole;
the engagement member (303) comprises a connecting block (3033), and a threaded hole is formed on an end face of the connecting block; and
when the shower door assembly is in a working state,
the fixed frame (20) is fixed on a mounting surface, the fixing seat (302) is detachably mounted in a channel of the adjustment frame (10), the threaded hole of the engagement member (303) is aligned with the countersunk hole of the fixing seat (302), the adjustment bolt (301) passes through the through-hole (105) of the adjustment frame (10) and the countersunk hole in sequence and is inserted in the threaded hole, the fixed frame (20) is connected to the adjustment frame (10) with openings of the fixed frame (20) and the adjustment frame (10) facing each other and the engagement member (303) being in interference fit with the fixed frame (20), and a depth to which the adjustment bolt (301) is inserted in the threaded hole is configured to be adjusted through the through-hole (105) of the adjustment frame (10), so as to adjust a degree of overlap between the fixed frame (20) and the adjustment frame (10).

2. The shower door assembly according to claim 1, wherein a protrusion is formed on a bottom plate of the adjustment frame (10) to divide a bottom portion of the adjustment frame (10) into two cavities, the through-hole (105) of the adjustment frame (10) is formed at a bottom portion of a first cavity (103) of the two cavities, and engaging parts (104) are respectively formed on side walls of the first cavity (103).

3. The shower door assembly according to claim 1, wherein
the engagement member (303) is of a trapezoidal groove structure, and the connecting block (3033) is formed on a side, which faces an opening of the trapezoidal groove structure, of a bottom portion (3031) of the engagement member; and
the threaded hole (3034) is formed on the end face of the connecting block (3033), and the threaded hole (3034) is a through-hole.

4. The shower door assembly according to claim 1, wherein the fixed frame (20) is a channel profile with a rectangular cross-section, and limiting ribs (203) are respectively formed on inner walls of this channel profile.

5. The shower door assembly according to claim 1, wherein
the fixing seat (302) comprises a bottom plate (3021), and the countersunk hole is provided at a center of the bottom plate (3021); and
limiting blocks (3026) are respectively formed at both ends of the bottom plate (3021), and the limiting blocks (3026) are configured to prevent the connecting block (3033) from shaking in a direction perpendicular to an axial direction of the countersunk hole.

6. The shower door assembly according to claim 1 or 3, wherein a side wall of the engagement member is elastic to overcome deformation of the side wall of the engagement member towards a centerline of the trapezoidal groove structure.

7. The shower door assembly according to claim 6, wherein an angle between the side wall of the engagement member (303) and the bottom portion of the engagement member (303) is greater than 90 degrees.

8. The shower door assembly according to claim 1 or 5, wherein a tenon is formed at a tail end of the connecting block (3033), and the tenon is configured to be engaged with sides of limiting flanges (104) facing a bottom portion of the adjustment frame (10).

9. The shower door assembly according to claim 1, wherein an accommodation groove (107) is formed on a side of a protrusion of the adjustment frame (10) facing away from the opening of the channel profile, and the accommodation groove (107) is configured to accommodate a side edge of a screen of a shower door.

10. A shower door, wherein a frame of the shower door comprises the shower door assembly according to any one of claims 1 to 9.
